# EUROPÄISCHE PATENTSCHRIFT

(11) **EP 1 050 567 B1**
(45) Veröffentlichungstag und Bekanntmachung des Hinweises auf die Patenterteilung: **02.04.2003**
(21) Anmeldenummer: 00109312.9
(22) Anmeldetag: 29.04.2000
(51) Int. Cl.: C09K 3/00, C10L 3/00, E21B 37/06

(54) **Additive zur Inhibierung der Gashydratbildung**
Additives for the inhibition of gas hydrate formation
Additifs pour inhiber la formation d'hydrate de gaz

(30) Priorität: 03.05.1999 DE 19920152
(43) Veröffentlichungstag der Anmeldung: 08.11.2000
(73) Patentinhaber: Clariant GmbH, 65929 Frankfurt am Main (DE)
(72) Erfinder: Klug, Peter, Dr., 63762 Grossostheim (DE); Feustel, Michael, Dr., 55278 Köngernheim (DE)

(56) Entgegenhaltungen:
- WO-A-94/12761
- WO-A-96/08672
- WO-A-96/41785
- FR-A- 2 407 258
- US-A- 4 973 775

## Beschreibung

Die vorliegende Erfindung betrifft ein Additiv und ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der Amide von Polyglykol-Ethercarbonsäuren enthält.

Gashydrate sind kristalline Einschlußverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst alleine ist thermodynamisch instabil, erst durch die Einbindung von Gastmolekülen wird das Gitter stabilisiert und es entsteht eine eisähnliche Verbindung, die in Abhängigkeit von Druck und Gaszusammensetzung auch über den Gefrierpunkt von Wasser (bis über 25°C) hinaus existieren kann. Ein Überblick über das Thema Gashydrate ist in Sloan, Clathrate Hydrates of Natural Gases, M. Dekker, New York, 1990 gegeben.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Naßgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zu Blockierung verschiedenster Fördereinrichtungen, wie Pipelines, Ventilen oder Produktionseinrichtungen, in denen über längere Strecken bei niedrigeren Temperaturen Naßgas oder Mehrphasengemische transportiert werden, wie dies speziell in kälteren Regionen der Erde oder auf dem Meeresboden vorkommt.

Außerdem kann die Gashydratbildung auch beim Bohrvorgang zur Erschließung neuer Gas- oder Erdöllagerstätten bei entsprechenden Druck- und Temperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (zweistellige Prozentbeträge bezüglich der Wasserphase) niederen Alkoholen, wie Methanol, Glykol, oder Diethylenglykol unterdrückt werden. Der Zusatz dieser Additive bewirkt, daß die thermodynamische Grenze der Gashydratbildung nach niedrigeren Temperaturen und höheren Drücken verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man in den Temperatur- und Druckbereichen, in denen sich Gashydrate bilden können, Additive (Einsatzmenge < 2 %) zusetzt, die die Gashydratbildung entweder zeitlich hinauszuzögern (kinetische Inhibitoren) oder die Gashydratagglomerate klein und damit pumpbar gestalten, so daß diese durch die Pipeline transportiert werden können (sog. Agglomerat-Inhibitoren oder Anti-Agglomerates). Die dabei eingesetzten Inhibitoren behindern dabei entweder die Keimbildung und/oder das Wachstum der Gashydratpartikel oder modifizieren das Hydratwachstum derart, daß kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Agglomeratinhibitoren darstellen.

WO-A-96/08636 beschreibt oberflächenaktive Substanzen als Gashydratinhibitoren, die eine polare Kopfgruppe und einen hydrophoben Rest tragen, wobei im hydrophoben Rest nicht mehr als 12 Kohlenstoffatome enthalten sind. Als Beispiele werden Natriumvalerat, Butanol, Butylsulfat und Butylsulfonat, Alkylpyrrolidone sowie ein Zwitterion der Formel R₂N(CH₃)₂-(CH₂)₄SO₃- genannt.

WO-A-96/08456 beschreibt synergistische Mischungen aus den obengenannten Substanzen mit wasserlöslichen Copolymeren.

FR-A-2 407 258 beschreibt Amide carboxymethylierter oligomerer Polyethylenglykolmonoalkylether der Struktur RO(CH₂CH₂O)ₙCH₂CONR¹R², wobei R ein aliphatischer Rest mit 8-20 Kohlenstoffatomen oder ein mit einem C₈-C₁₂-Alkylrest substituierter Phenylrest ist und R¹ und R² Wasserstoff oder Alkylreste mit mindestens 3 Kohlenstoffatomen sind und deren Anwendung als Korrosionsschutzmittel, Detergenzadditiv oder Anti-Pollution-Additiv für Kraftstoffe.

US-5 817 898 beschreibt Polymere der Formel Hb-A-X-A-Hb, als Inhibitoren für die Gashydratbildung, wobei X eine Polyoxyalkylenkette darstellt, A eine Urethangruppe ist und Hb eine Alkyl-, Alkylaryl- oder Cycloalkylgruppe ist.

Um Gashydratinhibitoren auch bei stärkeren Unterkühlungen als zur Zeit möglich, d.h. weiter innerhalb der Hydratregion einsetzen zu können, bedarf es einer weiteren Wirkungssteigerung der verfügbaren Inhibitoren. Zusätzlich sind weitere, im Bezug auf ihre biologische Abbaubarkeit und Toxizität verbesserte Produkte nötig. Aufgabe der vorliegenden Erfindung war es also, weiter verbesserte Additive zu finden, die die Bildung von Gashydraten verlangsamen (kinetische Inhibitoren) bzw. die. Gashydratagglomerate klein und pumpbar halten (Anti-Agglomerates), um die zur Zeit noch verwendeten thermodynamischen Inhibitoren (Methanol und Glykole), die beträchtliche Sicherheitsprobleme und Logistikprobleme verursachen, ersetzen zu können.

Wie nun überraschenderweise gefunden wurde, zeigen modifizierte polymere Glykoletheramide Wirksamkeit als Gashydratinhibitor. Die Produkte unterdrücken je nach Struktur die Keimbildung bzw. das Wachstum oder die Agglomeration von Gashydraten und verstärken die Wirkung gängiger, bereits beschriebener Gashydratinhibitoren.

Gegenstand der Erfindung ist daher die Verwendung von Verbindungen der Formel (1) 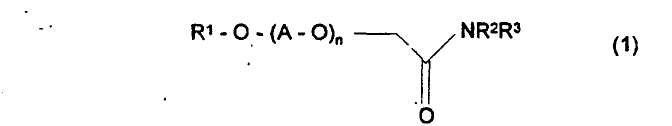 worin
- R¹: C₁-C₃₀-Alkyl, C₂-C₃₀-Alkenyl oder eine Gruppe der Formel -CH₂-CO-NR²R³ oder ein C₆-C₁₈-Arylrest, der mit einer C₁-C₁₂-Alkylgruppe substituiert sein kann
- R², R³: unabhängig voneinander Wasserstoff, C₁-C₆-Alkyl oder C₅-C₇-Cycloalkyl, oder R² und R³ unter Einschluß des Stickstoffatoms, an das sie gebunden sind, einen Ring von 4 bis 8 Ringatomen bilden, wobei außer Kohlenstoffatomen auch Sauerstoff- oder Stickstoffatome im Ring enthalten sein können
- A: ein C₂-C₄-Alkylenrest
- N: eine ganze Zahl von 1 bis 20 bedeuten
als Gashydratinhibitoren.

Je nach Art der Anwendung bedeutet R¹ vorzugsweise C₁-C₈-Alkyl oder C₈-C₃₀-Alkyl. R² und R³ stehen vorzugsweise für Wasserstoff oder C₁-C₄-Alkyl. A bedeutet vorzugsweise einen Ethylenrest, n eine ganze Zahl von 2 bis 10.

Die Verbindungen der Formel (1) sind aus Polyglykolmonoalkylethern oder Polyalkylenglykolen zugänglich, indem man zunächst das Polyglykol in die entsprechende alkylierte Carbonsäure überführt. Dies kann durch Oxidation der endständigen CH₂OH-Gruppe zur Carbonsäurefunktion oder Umsetzung des Glykolethers mit Chloressigsäure- oder Acrylsäurederivaten auf literaturbekannten Wegen geschehen.

Beispiele als Basisprodukte geeigneter Glykolether sind Polyethylenglykole mit Molekulargewichten von 100-1000 g/mol, Ethylenoxid/Propylenoxid-Mischpolymerisate (Block- oder statistische Copolymere), Methylpolyglykole, Butylpolyglykole, Isobutylpolyglykole, aber auch Glykolether auf Basis Octanol, 2-Ethylhexanol, Decanol, Isodecanol, Dodecanol, Tetradecanol, Hexadecanol, Octadecanol, Oleylalkohol oder synthetischer oder nativer Fettalkoholschnitte. Geeignet sind ebenfalls Glykolether auf Basis von Alkylphenolen mit einer C₁-C₁₂-Alkylgruppe.

Die erhaltenen Ethercarbonsäuren setzt man dann mit den entsprechenden Monooder Dialkylaminen zum entsprechenden Ethercarbonsäureamid um. Die Amidierung kann mit und ohne Einsatz von Katalysatoren bei Reaktionstemperaturen zwischen 80 und 200, bevorzugt zwischen 100 und 180°C erfolgen.

Geeignete Amine sind Amine mit 1-10 Kohlenstoffatomen wie Methylamin, Ethylamin, Propylamin, n-Butylamin, Isobutylamin, sec.-Butylamin, Pentylamine, Hexylamine, Dimethylamin, Diethylamin, Dipropylamine, Dibutylamin, Diisopropylamin, Diisobutylamin, Pyrrolidin, Piperidin oder Morpholin. Besonders geeignet sind Amine mit C₃-C₅-Alkylresten oder cyclische Amine mit 5 bis 7 Kettengliedern, besonders bevorzugt sind Diethylamin, Isopropylamin, Isobutylamin, Isopentylamin, Piperidin und Pyrrolidin.

Die Verbindungen können alleine oder in Kombination mit anderen bekannten Gashydratinhibitoren eingesetzt werden. Im allgemeinen wird man dem zur Hydratbildung neigenden System soviel des erfindungsgemäßen Gashydratinhibitors zusetzen, daß man unter den gegebenen Druck- und Temperaturbedingungen eine ausreichende Inhibierung erhält. Die erfindungsgemäßen Gashydratinhibitoren werden in Mengen verwendet, so daß ihre Konzentration in der wäßrigen Phase, in der die Gashydratbildung verhindert werden soll, zwischen 0,01 und 2 Gew.-% (bezogen auf das Gewicht der wäßrigen Phase), entsprechend 100 - 20.000 ppm, vorzugsweise 0,02 bis 1 Gew.-% beträgt. Werden die erfindungsgemäßen Gashydratinhibitoren in Mischung mit anderen Gashydratinhibitoren im Umfang dieser Erfindung verwendet, so beträgt die Konzentration der Mischung 0,01 bis 2 bzw. 0,02 bis 1 Gew.-% in der wäßrigen Phase.

Man kann je nach der Struktur des polymeren Glykoletheramids Additive erhalten, die die Gashydratbildung unterschiedlich hemmen:

Bei kurzem Alkylrest R¹ (ca. C₁-C₈) bzw. bei hohem Ethylenoxidgehalt erhält man wasserlösliche Produkte, die die Keimbildung der Gashydrate unterdrücken und als kinetische Inhibitoren wirken, bzw. die Wirkung anderer kinetischer Inhibitoren als synergistische Komponenten verstärken können, wie in den beigefügten Beispielen gezeigt wird.

Bei längerem Alkylrest R¹ (ca. C₈-C₃₀) bzw. bei geringeren Gehalten an Ethylenoxid oder bei Verwendung von Propylenoxid erhält man hydrophobere Amide mit tensidischem Charakter, die die Oberfläche von Gashydratpartikeln mit Öl benetzen und damit die Zusammenlagerung der Hydrate behindern; sie fungieren somit als Agglomerat-Inhibitoren. Die Agglomerat-Inhibitoren sind in der Kondensatphase des Mehrphasengemisches im allgemeinen zumindest teilweise löslich.

Besonders geeignet als Gashydratinhibitoren und somit eine bevorzugte Ausführungsform dieser Erfindung sind auch Mischungen der Verbindungen gemäß Formel (1) mit einem oder mehreren Polymeren mit einem durch Polymerisation erhaltenen Kohlenstoff-Backbone und Amidbindungen in den Seitenketten. Hierzu zählen besonders Polymere wie Polyvinylpyrrolidon, Polyvinylcaprolactam, Polyiisopropylacrylamid, Polyacryloylpyrrolidin, Copolymere aus Vinylpyrrolidon und Vinylcaprolactam, Copolymere aus Vinylcaprolactam und N-Methyl-N-Vinylacetamid sowie Terpolymere von Vinylpyrrolidon, Vinylcaprolactam und weiteren anionischen, kationischen und neutralen Comonomeren mit vinylischer Doppelbindung wie 2-Dimethylaminomethacrylat, 1-Olefinen, N-Alkylacrylamiden, N-Vinylacetamid, Acrylamid, Natrium-2-acrylamido-2-methyl-1-propansulfonat (AMPS) oder Acrylsäure. Weiterhin sind auch Mischungen mit Homo- und Copolymeren von N,N-Dialkylacrylamiden wie N-Acryloylpyrrolidin, N-Acryloylmorpholin und N-Acryloylpiperidin oder N-Alkylacrylamiden wie Isopropylacrylamid geeignet. Ebenfalls sind Mischungen mit Alkylpolyglykosiden, Hydroxyethylcellulose, Carboxymethylcellulose sowie anderen ionischen oder nichtionischen Tensidmolekülen geeignet.

In einer bevorzugten Ausführungsform der Erfindung werden die erfindungsgemäßen Gashydratinhibitoren in Mischung mit Polymeren verwendet, die in WO-A-96/08672 offenbart sind. Es handelt sich bei diesen Polymeren um solche, die Struktureinheiten der Formel 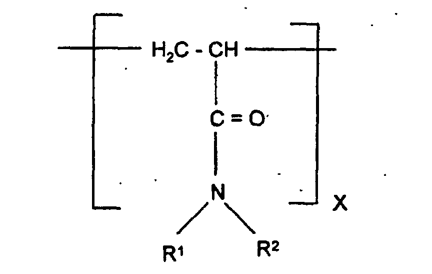 aufweisen, worin R¹ für eine Kohlenwasserstoffgruppe mit 1 bis 10 Kohlenstoffatomen und 0 bis 4 Heteroatomen, ausgewählt aus N, O und S, R² für eine Kohlenwasserstoffgruppe gleicher Definition wie R¹, und
X für die durchschnittliche Zahl der sich wiederholenden Einheiten steht, wobei letztere so bemessen ist, daß das Polymer ein Molekulargewicht von 1000 bis 6 000 000 aufweist. Für die Verwendung im Umfang vorliegender Erfindung sind Polyisopropylacrylamide und Polyacryloylpyrrolidine besonders gut geeignet.

In einer weiteren bevorzugten Ausführungsform der Erfindung werden die erfindungsgemäßen Gashydratinhibitoren in Mischung mit Polymeren verwendet, die in WO-A-96/41785 offenbart sind.
Dieses Dokument offenbart Gashydratinhibitoren, umfassend Struktureinheiten 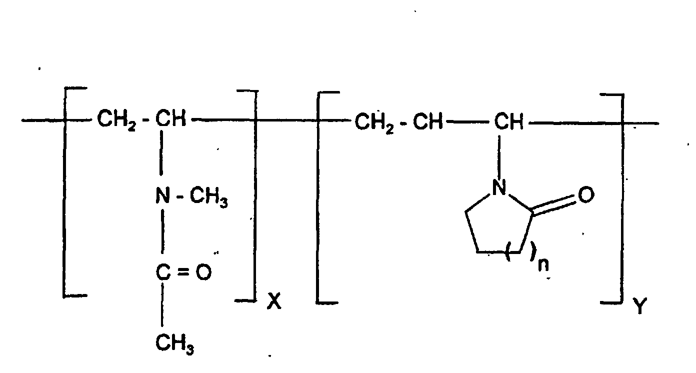 worin n eine Zahl von 1 bis 3 ist, und x und y die Zahl der repetitiven Einheiten darstellen, die so bemessen ist, daß das Molekulargewicht des Polymeren zwischen 1000 und 6 000 000 liegt. Für die Verwendung im Umfang vorliegender Erfindung sind Copolymere aus N-Vinylcaprolactam und N-Vinyl-N-Methylacetamid oder Vinylpyrrolidon besonders gut geeignet.

In einer weiteren bevorzugten Ausführungsform der Erfindung werden die erfindungsgemäßen Gashydratinhibitoren in Mischung mit anderen Polymeren verwendet, die in WO-A-94/12761 offenbart sind. Das Dokument offenbart Additive zur Verhinderung der Bildung von Gashydraten, welche Polymere, umfassend cyclische Substituenten mit 5 bis 7 Ringgliedern, enthalten. Für die Verwendung im Umfang vorliegender Erfindung sind insbesondere Polyvinylcaprolactam, Polyvinylpyrrolidon und Hydroxyethylcellulose geeignet.

Besonders geeignet sind auch Mischungen der erfindungsgemäßen Polymere mit Gashydratinhibitoren auf Maleinsäureanhydridbasis, wie sie in WO-A-97/6506 beschrieben sind, insbesondere mit Mono- und oder Diaminen umgesetzten Maleinsäureanhydridcopolymere. Hierunter sind insbesondere modifizierte Vinylacetat-Maleinsäureanhydrid-Copolymere besonders bevorzugt.

Werden Mischungen verwendet, so betragen die Konzentrationsverhältnisse zwischen den erfindungsgemäßen Gashydratinhibitoren und den zugemischten Komponenten von 90:10 bis 10:90 Gewichtsprozente, vorzugsweise werden Mischungen in den Verhältnissen 75:25 bis 25:75, und insbesondere von 60:40 bis 40:60 verwendet.

Die Verbindungen können, ebenso wie ihre Mischungen mit anderen Gashydratinhibitoren, bei der Erdöl- und Erdgasförderung oder der Bereitung von Bohrspülungen mittels gängiger Ausrüstung, wie Injektionspumpen o.ä. dem für die Hydratbildung anfälligen Mehrphasengemisch zugegeben werden, aufgrund der guten Löslichkeit der erfindungsgemäßen Polymere ist eine schnelle und gleichmäßige Verteilung des Inhibitors in der zur Hydratbildung neigenden Wasserphase bzw. der Kondensatphase gegeben.

Da die Inhibitoren primär die Keimbildung und das Wachstum von Hydratkeimen verzögern oder die Agglomeration verhindern, wird die Zugabe des Inhibitors bevorzugt erfolgen, bevor Gashydratbildung auftritt, d.h. noch oberhalb der Gleichgewichtstemperatur der Hydratbildung. Dies ist beispielsweise gegeben, wenn man den Inhibitor z.B. direkt an der Erdgasquelle oder am Beginn der zu inhibierenden Pipeline zusetzt.

Zur Untersuchung der inhibierenden Wirkung der Versuchsprodukte wurde ein Stahl-Rührautoklav mit Temperatursteuerung, Druck- und Drehmomentaufnehmer mit 450 ml Innenvolumen benutzt, der mit destilliertem Wasser und Gas im Volumenverhältnis 20 : 80 gefüllt wurde. Anschließend wurden 90 bar Erdgas aufgedrückt.

Ausgehend von einer Anfangstemperatur von 17,5°C wurde innerhalb 2 h auf 2°C abgekühlt, dann 18 h bei 2°C gerührt und innerhalb 2 h wieder auf 17,5°C aufgeheizt. Dabei wird zunächst eine Druckabnahme gemäß der thermischen Ausdehnung des Gases beobachtet. Tritt während der Unterkühlungszeit die Bildung von Gashydratkeimen auf, so verringert sich der gemessene Druck, wobei ein Anstieg des gemessenen Drehmomentes zu beobachten ist; weiteres Wachstum und zunehmende Agglomeration dieser Hydratkeime führt ohne Inhibitor schnell zu einem weiteren Anstieg des gemessenen Drehmomentes. Beim Aufwärmen des Reaktionsgemisches zerfallen die Gashydrate wieder, so daß am Ende des Versuchs wieder der Ausgangszustand erreicht wird.

Als Maß für die inhibierende Wirkung des Versuchsprodukts wird die Zeit vom Erreichen der Minimaltemperatur von 2°C bis zur ersten Gasaufnahme (T_{ind}) bzw. die Zeit bis zum Anstieg des Drehmoments (T_{agg}) benutzt. Lange Induktionszeiten bzw. Agglomerationszeiten weisen auf eine Wirkung als kinetischer Inhibitor hin. Das im Versuchsautoklaven gemessene Drehmoment dient dagegen als Größe für die Agglomeration der Hydratkristalle. Bei einem guten Agglomerationsinhibitor ist das Drehmoment, das sich nach Bildung von Gashydraten aufbaut, gegenüber dem Blindwert deutlich verringert. Im Idealfall bilden sich schneeartige, feine Hydratkristalle in der vorhandenen Kondensatphase, die sich nicht zusammenlagern und in der Praxis nicht zum Verstopfen der zu Gastransport und -förderung dienenden Installationen führen.

### Beispiel 1

### Butylpolyglykol-ethercarbonsäure-isobutylamid:

In einem 250 ml-Vierhalskolben mit Rührer und Destillationsbrücke wurden unter Stickstoffatmosphäre 92,0 g (0,27 mol, Gebrauchsmol aus der Säurezahl ermittelt; über Williamson-Ethersynthese aus dieser Vorstufe erhalten) einer Ethercarbonsäure auf Basis Butanol + 3,5 Ethylenoxid vorgelegt und bei 150°C die enthaltene Wassermenge von 11,6 g abdestilliert. Nun wurden portionsweise innerhalb 6 h insgesamt 29,6 g (0,40 mol) Isobutylamin zugetropft und jeweils ein Amin-Wassergemisch abdestilliert. Letztes Reaktionswasser wurde bei 135°C/25 mbar abdestilliert und die Probe anschließend heiß filtriert. Man erhält 101 g einer klaren, bräunlichen Flüssigkeit, Säurezahl 7,9 mg KOH/g, Amid-Stickstoff: 4,1 %,<die sich opak in Wasser löst.

### Beispiel 2

### Butylpolyglykol-ethercarbonsäure-pyrrolidinamid:

Analog zu Beispiel 1 wurden aus 350 g (1,00 mol) einer Ethercarbonsäure auf Basis Butanol + 3,5 Ethylenoxid und 142 g Pyrrolidin (2,00 mol) 327 g eines braunen, klaren Öls isoliert, Säurezahl 7,4 mg KOH/g, Amidstickstoff 3,9 %, das sich klar in Wasser löst.

### Beispiel 3

### PEG 400-etherdicarbonsäure-bis-isobutylamid:

Analog zu Beispiel 1 wurden aus 243 g (0,259 mol) einer Diethercarbonsäure auf Basis Polyethylenglykol 400 (enthält Wasser, ca. 58 % Wirksubstanz) und 87,9 g Isobutylamin (1,20 mol) 170 g eines braunen, klaren Öls isoliert, Säurezahl 20,9 mg KOH/g, Amidstickstoff 4,4 %, das sich klar in Wasser löst.

### Beispiel 4

### Methylpolyglykol-ethercarbonsäure-isobutylamid

Analog zu Beispiel 1 wurden aus 150 g (0,40 mol) einer Ethercarbonsäure auf Basis eines Methylpolyglykols mit einem mittleren Molekulargewicht von 350 g/mol (wasserfrei) und 34,3 g Isobutylamin (0,47 mol) 156 g eines braunen, klaren Öls isoliert, Säurezahl 3,0 mg KOH/g, Amidstickstoff 3,1 %, das sich klar in Wasser löst.

### Beispiel 5

### Emulsogen COA 070-isobutylamid WR 98/143

Analog zu Beispiel 1 wurden aus 329,4 g (0,50 mol nach Säurezahl) einer Ethercarbonsäure auf Basis C14/15-Oxoalkohol + 7 Ethylenoxid und 55,1 g Isobutylamin (0,75 mol) 303 g eines braunen, klaren Öls mit Säurezahl 2,3 mg KOH/g isoliert.

### Beispiel 6

Analog zu Beispiel 1 wurden aus 538 g (1,00 mol nach Säurezahl) einer Ethercarbonsäure auf Basis n-Octanol + 8 Ethylenoxid und 82,8 g Isobutylamin (1,13 mol) 511 g eines braunen, klaren Öls mit Säurezahl 3,2 mg KOH/g und Amidstickstoff 2,34 % isoliert.

### Beispiel 7

Analog zu Beispiel 1 wurden aus 787 g (1,00 mol nach Säurezahl) einer Ethercarbonsäure auf Basis Oleyl-/Cetylalkohol + 8 Ethylenoxid und 87,8 g Isobutylamin (1,20 mol) 715,4 g eines braunen, klaren Öls mit Säurezahl 2,1 mg KOH/g und Amidstickstoff 1,78 % isoliert.

### Vergleichsbeispiel 1

Als Vergleichssubstanz wurde ein mit Isobutylamin und 3-Diethylaminopropylamin modifiziertes Vinylacetat/Maleinsäureanhydridcopolymer verwendet. Es lag als 25 % Lösung in Butylglykol/Wasser vor.

### Vergleichsbeispiel 2

Als Vergleichssubstanz wurde eine Lösung von Polyvinylcaprolactam in Butylglykol verwendet; Molekulargewicht ca. 5000 g/mol.

### Testergebnisse:

### Zusammensetzung des Erdgases:

Methan: 87,6 %, Ethan 1,26 %, Propan 0,08 %, Butane 0,02 %, Kohlendioxid 0,35 %, Stickstoff: 10,61 %.
Unterkühlung unter die Gleichgewichtstemperatur der Hydratbildung bei 65 bar 7°C Unterkühlung bei 90 bar: 8,5°C

| Substanz A | Dosierung Substanz A | Substanz B | Dosierung Substanz B | p (bar) | T_{ind} (h) | T_{agg} (h) |
|---|---|---|---|---|---|---|
| - | - | - | - | 64 | 0 | 0 |
| - | - | - | - | 90 | 0 | 0 |
| Beispiel 1 | 5000 | - | - | 64 | 10,3 | 11,6 |
| Beispiel 2 | 5000 | - | - | 65 | 12,1 | 12,9 |
| Beispiel 3 | 5000 | - | - | 64 | 3 | 3,2 |
| | | | | | | |
| Beispiel 1 | 5000 | - | - | 92 | 0,2 | 0,9 |
| Beispiel 3 | 5000 | - | - | 94 | 0 | 0,2 |
| | | | | | | |
| Beispiel 1 | 2500 | Vergl.1 | 2500 | 95 | 5,8 | 5,8 |
| - | - | Vergl. 1 | 5000 | 95 | 0,2 | 0,2 |
| - | - | Vergl.2 | 2500 | 90 | 5,2 | |
| Beispiel 1 | 2500 | Vergl. 2 | 2500 | 90 | > 16 | |

Wie aus den obigen Testresultaten zu erkennen ist, wirken die erfindungsgemäßen Produkte schon alleine als kinetische Hydratinhibitoren bei niedrigeren Drücken bzw. Unterkühlungen (64 bar, Beispiele 1 bis 3).

In den weiteren Beispielen ist gezeigt, daß die Produkte mit anderen Hydratinhibitoren synergistische Mischungen bilden; so zeigt eine Mischung aus Beispiel 1 und Vergl. 1 bei 95 bar eine deutliche Wirkung (ca. 6 h vs. 0 h beim Blindwert), obwohl beide Komponenten alleine beim gleichen Druck Werte im Bereich des Blindwertes erzeugen.

Ebenso tritt bei Mischung von Beispiel 1 mit Polyvinylcaprolactam (Vergleichsbeispiel 2) eine verstärkende Wirkung auf; während PVCap bei einer Dosierung von 2500 ppm nur 5 h Induktionszeit ergibt, verlängert sich diese auf > 18 h, wenn 2500 ppm Beispiel 1 zugegeben werden, obwohl Beispiel 1 alleine bei > 90 bar auch bei 5000 ppm Dosierung nicht wirksam ist.

Um die Wirkung als Agglomeratinhibitoren zu prüfen, wurde im oben verwendeten Testautoklaven Wasser und Testbenzin vorgelegt (zusammen 20 % des Volumens, Volumenverhältnis Wasser: Testbenzin = 1 : 2) und bezogen auf die Wasserphase 5000 ppm des jeweiligen Additivs zugegeben.
Bei 90 bar Autoklavendruck und einer Rührergeschwindigkeit von 5000 U/min wurde die Temperatur des Autoklaven innerhalb von 2 h von 17,5 auf 2°C gesenkt, dann 16 h bei 2°C gerührt und wieder aufgewärmt Dabei wurde die Induktionszeit bis zum Auftreten der ersten Hydratbildung (ausgehend vom Erreichen der vollen Unterkühlung) und das dabei auftretende Drehmoment am Rührer gemessen, das ein Maß für die Agglomerisation der Gashydrate ist.
Wie aus den Beispielen zu ersehen ist, waren bei Beispiel 1 und 5 die gemessenen Drehmomente im Vergleich zum Blindwert trotz schneller und heftiger Hydratbildung, die mit einem deutlichen Temperaturpeak begleitet war, deutlich reduziert. Die spricht für eine deutliche agglomeratinhibierende Wirkung der erfindungsgemäßen Produkte. Überraschenderweise wiesen die Produkte unter den Versuchsbedingungen zusätzlich auch eine deutliche Wirkung als kinetische Inhibitoren auf, bei Beispiel 6 und 7 wurde keine Hydratbildung beobachtet.

| Substanz | Dosierung | T_{ind} (h) | Mₘₐₓ (Ncm) |
|---|---|---|---|
| Ohne Additiv | - | 0,1 | 15,9 |
| Beispiel 1 | 5000 ppm | 5,9 | 0,4 |
| Beispiel 5* | 5000 ppm | 10,2 | 1,6 |
| Beispiel 6 | 5000 ppm | > 16 | n.b. |
| Beispiel 7 | 5000 ppm | > 16 | n.b. |

| | | | |
|---|---|---|---|
| * Mittel von 3 Messungen | | | |

## Patentansprüche

1. Verwendung von Verbindungen der Formel (1) 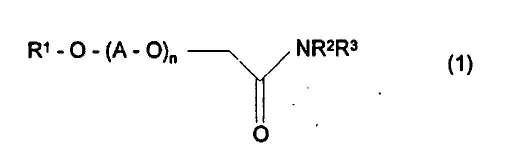 worin
R¹ C₁-C₃₀-Alkyl, C₂-C₃₀-Alkenyl oder eine Gruppe der Formel -CH₂-CO-NR²R³ oder ein Arylrest, der mit einer C₁-C₁₂-Alkylgruppe substituiert ist
R², R³ unabhängig voneinander Wasserstoff, C₁-C₆-Alkyl oder C₅-C₇-Cycloalkyl, oder R² und R³ unter Einschluß des Stickstoffatoms, an das sie gebunden sind, einen Ring von 4 bis 8 Ringatomen bilden, wobei außer Kohlenstoffatomen auch Sauerstoff- oder Stickstoffatome im Ring enthalten sein können
A ein C₂-C₄-Alkylenrest
n eine ganze Zahl von 1 bis 20 bedeuten
als Gashydratinhibitoren zur Unterdrückung von Keimbildung, Wachstum bzw. Agglomeration von Gashydraten in Mehrphasengemischen, die gegen Gashydratbildung anfällig sind.

2. Verwendung nach Anspruch 1, wobei R¹ C₁-C₈-Alkyl bedeutet.

3. Verwendung nach Anspruch 1, wobei R¹ C₈-C₃₀-Alkyl bedeutet.

4. Verwendung nach Anspruch 1 bis 3, wobei R² und R³ unabhängig voneinander Wasserstoff oder C₁-C₄-Alkyl bedeuten.

5. Verwendung nach Anspruch 1 bis 4, wobei A für einen Ethylenrest steht.

6. Verwendung nach Anspruch 1 bis 5, wobei n eine Zahl von 2 bis 10 bedeutet.

7. Additiv zur Inhibierung der Gashydratbildung, umfassend
A) eine Verbindung der Formel 1 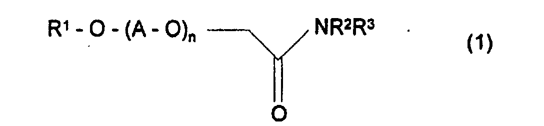 worin
R¹ C₁-C₃₀-Alkyl, C₂-C₃₀-Alkenyl oder eine Gruppe der Formel -CH₂-CO-NR²R³ oder ein Arylrest, der mit einer C₁-C₁₂-Alkylgruppe substituiert ist
R², R³ unabhängig voneinander Wasserstoff, C₁-C₆-Alkyl oder C₅-C₇-Cycloalkyl, oder R² und R³ unter Einschluß des Stickstoffatoms, an das sie gebunden sind, einen Ring von 4 bis 8 Ringatomen bilden, wobei außer Kohlenstoffatomen auch Sauerstoff- oder Stickstoffatome im Ring enthalten sein können
A ein C₂-C₄-Alkylenrest
n eine ganze Zahl von 1 bis 20 bedeuten
und
B) wenigstens ein wasserlösliches Polymer, ausgewählt aus Polyisopropylacrylamid, Polyacryloylpyrrolidin, Polyvinylcaprolactam, Polyvinylpyrrolidon, Copolymeren aus Vinylcaprolactam mit Vinylpyrrolidon oder N-Vinyl-N-Methylacetamid sowie Copolymeren, die Struktureinheiten von Maleinsäure oder deren Anhydrid oder Amidderivate enthalten.

## Claims

1. The use of compounds of the formula (1) 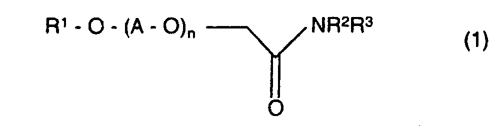 in which
R¹ is C₁-C₃₀-alkyl, C₂-C₃₀-alkenyl or a group of the formula -CH₂-CO-NR²R³ or an aryl radical which is substituted by a C₁-C₁₂-alkyl group,
R², R³ independently of one another, are hydrogen, C₁-C₆-alkyl or C₅-C₇-cycloalkyl, or R² and R³, including the nitrogen atom to which they are bonded, form a ring of 4 to 8 ring atoms, it being possible for the ring also to contain oxygen or nitrogen atoms in addition to carbon atoms,
A is a C₂-C₄-alkylene radical and
n is an integer from 1 to 20,
as gas hydrate inhibitors for suppressing nucleation, growth or agglomeration of gas hydrates in multiphase mixtures which are susceptible to gas hydrate formation.

2. The use as claimed in claim 1, R¹ being C₁-C₈-alkyl.

3. The use as claimed in claim 1, R¹ being C₈-C₃₀-alkyl.

4. The use as claimed in any of claims 1 to 3, R² and R³, independently of one another, being hydrogen or C₁-C₄-alkyl.

5. The use as claimed in any of claims 1 to 4, A being an ethylene radical.

6. The use as claimed in any of claims 1 to 5, n being a number from 2 to 10.

7. An additive for inhibiting gas hydrate formation, comprising
A) a compound of the formula 1 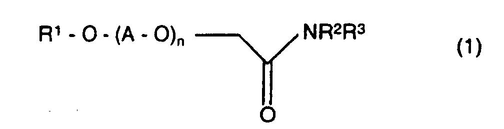 in which
R¹ is C₁-C₃₀-alkyl, C₂-C₃₀-alkenyl or a group of the formula -CH₂-CO-NR²R³ or an aryl radical which is substituted by a C₁-C₁₂-alkyl group,
R², R³ independently of one another, are hydrogen, C₁-C₆-alkyl or C₅-C₇-cycloalkyl, or R² and R³, including the nitrogen atom to which they are bonded, form a ring of 4 to 8 ring atoms, it being possible for the ring also to contain oxygen or nitrogen atoms in addition to carbon atoms,
A is a C₂-C₄-alkylene radical and
N is an integer from 1 to 20,
and
B) at least one water-soluble polymer selected from polyisopropylacrylamide, polyacryloylpyrrolidine, polyvinylcaprolactam, polyvinylpyrrolidone, copolymers of vinylcaprolactam with vinylpyrrolidone or N-vinyl-N-methylacetamide and copolymers which contain structural units of maleic acid or its anhydride or amide derivatives.

## Revendications

1. Utilisation de composés de formule (1) 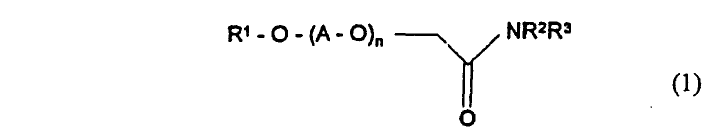 dans laquelle
R¹ représente un reste alkyle en C₁-C₃₀ ou alcényle en C₂-C₃₀ ou un groupe de formule -CH₂-CO-NR²R³ ou un reste aryle substitué par un groupe alkyle en C₁-C₁₂;
R² et R³ représentent, indépendamment l'un de l'autre, un atome d'hydrogène ou un reste alkyle en C₁-C₆ ou cycloalkyle en C₅-C₇, ou R² et R³ forment avec l'atome d'azote auquel ils sont liés un cycle de 4 à 8 atomes cycliques pouvant contenir dans le cycle, en plus des atomes de carbone, des atomes d'oxygène ou d'azote;
A représente un reste alkylène en C₂-C₄;
n est un nombre entier de 1 à 20;
comme inhibiteurs d'hydrates de gaz pour empêcher la formation de germes, la croissance ou l'agglomération d'hydrates de gaz dans des mélanges à plusieurs phases sensibles à la formation d'hydrates de gaz.

2. Utilisation selon la revendication 1, dans laquelle R¹ représente un reste alkyle en C₁-C₈.

3. Utilisation selon la revendication 1, dans laquelle R¹ représente un reste alkyle en C₈-C₃₀.

4. Utilisation selon les revendications 1 à 3, dans laquelle R² et R³ représentent, indépendamment l'un de l'autre, un atome d'hydrogène ou un reste alkyle en C₁-C₄.

5. Utilisation selon les revendications 1 à 4, dans laquelle A représente un reste éthylène.

6. Utilisation selon les revendications 1 à 5, dans laquelle n représente un nombre de 2 à 10.

7. Additif pour l'inhibition de la formation d'hydrates de gaz, comprenant
A) un composé de formule 1 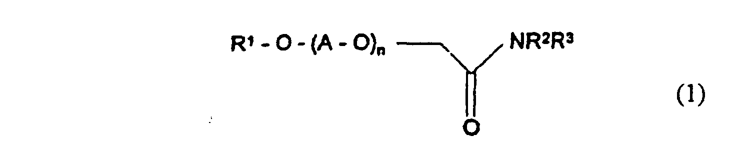 dans laquelle
R¹ représente un reste alkyle en C₁-C₃₀ ou alcényle en C₂-C₃₀ ou un groupe de formule -CH₂-CO-NR²R³ ou un reste aryle substitué par un groupe alkyle en C₁-C₁₂;
R² et R³ représentent, indépendamment l'un de l'autre, un atome d'hydrogène ou un reste alkyle en C₁-C₆ ou cycloalkyle en C₅-C₇, ou R² et R³ forment avec l'atome d'azote auquel ils sont liés un cycle de 4 à 8 atomes cycliques pouvant contenir dans le cycle, en plus des atomes de carbone, des atomes d'oxygène ou d'azote;
A représente un reste alkylène en C₂-C₄;
n est un nombre entier de 1 à 20; et
B) au moins un polymère soluble dans l'eau choisi parmi un polyisopropylacrylamide, une polyacryloylpyrrolidine, un polyvinylcaprolactame, une polyvinylpyrrolidone, des copolymères de vinylcaprolactame avec de la vinylpyrrolidone ou du N-vinyl-N-méthylacétamide et des copolymères contenant des unités constitutives acide maléique, son anhydride ou ses dérivés d'amides.
